# EUROPEAN PATENT SPECIFICATION

(11) **EP 0 467 526 B1**
(45) Date of publication and mention of the grant of the patent: **13.09.1995**
(21) Application number: 91305385.6
(22) Date of filing: 14.06.1991
(51) Int. Cl.: B01D 53/66, B01D 53/34

(54) **Method for ozone decomposition**
Verfahren zur Ozonzersetzung
Procédé pour la décomposition de l'ozone

(30) Priority: 16.07.1990 JP 188695/90
(43) Date of publication of application: 22.01.1992
(73) Proprietor: SAKAI CHEMICAL INDUSTRY CO., LTD.,, Sakai, Osaka (JP)
(72) Inventor: Yoshimoto, Masafumi c/o Sakai Chemical Ind. Co.Ltd, Osaka (JP); Nakatsuji, Tadao c/o Sakai Chemical Ind. Co. Ltd., Osaka (JP); Nagano, Kazuhiko c/o Sakai Chemical Ind. Co. Ltd., Osaka (JP); Tanaka, Masahiro c/o Sakai Chemical Ind. Co. Ltd., Osaka (JP)
(74) Representative: Geering, Keith Edwin

(56) References cited:
- EP-A- 0 371 740
- EP-A- 0 387 044
- DE-A- 3 703 137
- WORLD PATENTS INDEX LATEST Week 9140, Derwent Publications Ltd., London, GB; AN91-291388
- WORLD PATENTS INDEX LATEST Week 9140, Derwent Publications Ltd., London, GB; AN91-291389
- PATENT ABSTRACTS OF JAPAN vol. 16, no. 93 (C-917)(5136) 6 March 1992
- PATENT ABSTRACTS OF JAPAN vol. 15, no. 440 (C-883)(4968) 11 November 1991
- PATENT ABSTRACTS OF JAPAN vol. 11, no. 193 (C-430)(2640) 20 June 1987

## Description

### Field of the Invention

This invention relates to a method for decomposing ozone contained in a waste gas without substantial deactivation of ozone decomposition catalyst over a long period of time if the gas contains nitrogen oxides and/or sulfur oxides.

### Description of the Prior Art

There have been proposed various methods of decomposing noxious ozone contained in a waste gas, among which are, for example, an adsorption method wherein a porous material is used such as activated carbon or zeolite, or an oxidative decomposition method wherein a catalyst is used such as manganese dioxide.

However, the above known ozone decomposition methods are not satisfactory. The adsorption method has a disadvantage in that the adsorbent must be regenerated frequently since it is limited in adsorption ability. Therefore, the method is laborious and costly. The oxidative decomposition method has no such disadvantages as above, but has a disadvantage that the catalyst is deactivated with time.

The inventors already found that the deactivation of catalyst arises at least in part from accumulation of oxygen derived from adsorbed ozone on the catalyst. The inventors have further investigated the mechanism of deactivation of ozone decomposition catalyst, and found that when a waste gas contains nitrogen oxides or sulfur oxides even in a small amount together with ozone, the oxides deactivate the catalyst.

More specifically, it is likely that nitrogen oxides are adsorbed and form nitrites or nitrates on the catalyst to destroy active sites of the catalyst. It is also likely that sulfur oxides are adsorbed and form sulfites or sulfates on the catalyst to deactivate the catalyst.

EP-A-0371740 discloses treating waste gas with deozonizing catalyst, but without prior contact with any filter for nitrogen or sulfur oxides.

### Description of the Invention

It is, therefore, an object of the invention to provide a method for decomposing ozone contained in a waste gas without being attended by substantial deactivation of an ozone decomposition catalyst or a deozonizing catalyst over a long period of time if the gas contains nitrogen oxides and/or sulfur oxides.

Other features and advantages of the invention will be apparent from the following description taken in connection with the accompanying drawing wherein:

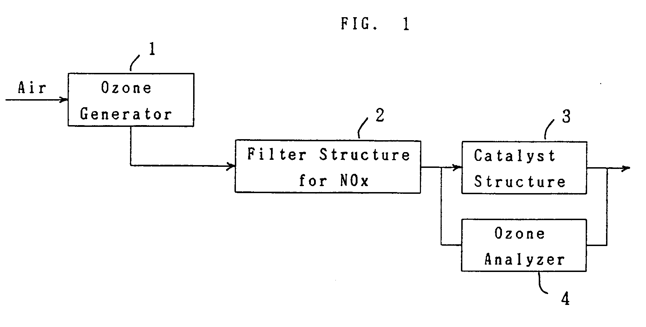

Fig. 1 is a diagram for measurement of ozone decomposition activity of catalyst.

The invention provides a method of deozonizing waste gas which comprises contacting the waste gas with a filter for nitrogen oxides and/or sulfur oxides and then with a deozonizing catalyst. The filter preferably contains at least one component selected from activated carbon, zeolites, perovskites and alkali and alkaline earth metal oxides, hydroxides and carbonates.

Any known deozonizing catalyst structure may be used which is composed of a carrier structure having a catalyst supported thereon. The catalyst itself may be formed into a structure. The catalysts include, for example, MnO₂, CuO, Fe₂O₃, Ag₂O, NiO, Co₃O₄, Pt and Pd. These catalysts may be used singly or as a mixture of two or more. Further, there may be used as a catalyst, for example, a multi-component catalyst such as MnO₂/TiO₂, MnO₂/alkali metal oxide and/or alkaline earth metal oxide, MnO₂/Ag₂O/TiO₂, MnO₂/WO₃/TiO₂, MnO₂/MoO₃/TiO₂, MnO₂/Ni₂O₃/TiO₂, Ni₂O₃/Ag₂O/TiO₂, Ag₂O/Ni₂O₃, Ag₂O/TiO₂, or a zeolite catalyst composed of a zeolite having a metal of an oxide of which oxide formation enthalpy - ΔH°f is at most 419 kJ (100 Kcal)/g-atom of oxygen. Among these are preferred Ag or Ni containing catalysts on account of small adsorptivity of or reactivity with nitrogen oxides and sulfur oxides. These catalysts decompose ozone into oxygen.

The deozonizing catalyst structure may be of any form, but it is preferably in the form of honeycomb structure composed of the catalyst itself or of a carrier material having a deozonizing catalyst supported thereon. The carrier material is not specifically limited, but there may be preferably used as the carrier material, for example, a honeycomb structure composed of a plurality of corrugated ceramic fibers sheets.

By way of example, the deozonising catalyst structure may be prepared by admixing and kneading a deozonizing catalyst with clay together in the presence of water to form a moldable composition, extruding the composition into a honeycomb structure, and then drying the honeycomb structure.

The filter structure for nitrogen oxides and sulfur oxides herein can be an inactive structure supporting thereon an adsorbent for nitrogen oxides and/or sulfur oxides. The adsorbent is preferably alkaline earth metal oxides such as MgO, CaO, SrO or BaO, alkaline earth metal hydroxides such as Mg(OH)₂ or Ca(OH)₂, zeolites such as Na-containing Type X zeolite, Na-containing Type Y zeolite, Na-containing mordenite, Na-ZSM-5, or perovskite structure compounds such as YBa₂Cu₃O_{3-y} or La₁₋ₓSrₓCoO₃.

The filter structure may also be of any form, but it is preferably in the form of honeycomb structure composed of inactive carrier material having the adsorbent carried therein or thereon. For instance, clay and an adsorbent are admixed and kneaded together in the presence of water to form a moldable composition, the composition is extruded in to a honeycomb structure, and then the honeycomb structure is dried and calcined.

A filter structure which has activated carbon as an adsorbent for nitrogen oxides and sulfur oxides supported thereon or therein is also useful in accordance with the invention. The activated carbon filter structure may also preferably have a honeycomb structure, and a commercially available activated carbon honeycomb structure may be preferably used as a filter structure. A honeycomb structure composed of a plurality of corrugated activated carbon fiber sheets may also be preferably used. However, the filter structure may be in the form of pellet, plate or tube. A foamed material which has activated carbon thereon and is preferably permeable to an ozone-laden gas may also be used as a filter structure.

It is preferred that the filter structure carries thereon or therein FeOOH, alkaline earth metal oxides such as MgO, CaO, SrO or BaO or alkaline earth metal hydroxides such as Mg(OH)₂ or Ca(OH)₂ to improve the adsorption activity of the filter structure for nitrogen oxides and sulfur oxides in an ozone-laden gas. The filter structure may also carry thereon such zeolites or perovskite structure compounds as hereinbefore described.

It is particularly preferred that the filter structure contains a two component adsorbent composed of activated carbon as a first adsorbent and at least one adsorbent selected from the group consisting of oxides, hydroxides and carbonates of alkali metals and alkaline earth metals as a second adsorbent.

The alkali metal may be Li, K or Na, and the alkaline earth metal may be Ca, Mg, Ba or Sr. There may be preferably used as their compounds, for example, LiOH, KOH. NaOH, MgCO₃ CaCO₃, SrCO₃ or BaCO₃. These compounds may be used singly or as a mixture.

The two component adsorbent is preferably composed of 30-95% by weight of the first adsorbent and 70-5% by weight of the second adsorbent. When the two component adsorbent is supported on an inactive ceramic carrier material such as clay, the filter structure preferably supports the adsorbent in an amount of not less than 30% by weight, most preferably not less than 50% by weight, based on the filter structure.

The ozone-laden gas containing nitrogen oxides and/or sulfur oxides is passed through the filter structure at a space velocity usually of 100-100000 hr⁻¹ since the amount of the nitrogen oxides or sulfur oxides contained therein is usually not more than 1 ppm.

Then the ozone-laden gas is preferably contacted with the catalyst structure at temperatures of 0-40°C, e.g. at 10-30°C. When the temperature is less than 0°C, ozone may not decompose efficiently whereas when the temperature is more than 40°C, additional energy is undesirably needed to heat the ozone-laden gas. It is also preferred that ozone-laden gas is contacted with the catalyst structure at an area velocity of 5-70. The area velocity is defined as the value of space velocity (hr⁻¹) divided by gas contact area per unit volume of catalyst (m²/m³).

The invention will now be described in more detail with reference to examples.

### SECTION I

### Preparation of Filter Structure

An amount of 10 Kg of activated magnesium oxide having a specific surface area of 130 m²/g available from Kyowa Kagaku and 10 Kg of activated terra alba were dry-mixed together, and water was added thereto to provide a plastic composition. The composition was extruded to a honeycomb structure with an extruder provided with a die having a pitch of 3.3 mm and a wall thickness of 0.6 mm. The honeycomb structure was air-dried, and then calcined at 500°C for three hours.

### Preparation of Deozonizing Catalysts Structure

### Example 1

An amount of 704 g of MnO₂ having a specific surface area of 48 m²/g was added to 1034 ml of titania sol (containing 150 g/l of TiO₂) together with 250 g of glass beads, and the mixture was stirred for 30 minutes to form a slurry.

A honeycomb structure of corrugated ceramic fiber sheet having a void rate of 81 % and a pitch of 4.0 mm was impregnated with the slurry to provide a catalyst structure having a binary catalyst of MnO₂/TiO₂ (82/18 in weight ratio) supported thereon in a supporting ratio of 95 % based on the honeycomb.

### Example 2

An aqueous solution of 500 ml containing 17.8 g of manganese acetate (tetrahydrate), 282 g of cobalt nitrate (hexahydrate) and 1.5 g of silver nitrate was prepared. An aqueous solution of ammonium carbonate was added to neutralize the solution under stirring to a pH of 7.0 to form slurry-like precipitates.

Amounts of 250 g of manganese dioxide (MnO₂) and 103 g of silver nitrate (AgNO₃) were added to the slurry together with 250 g of glass beads to provide further slurry-like precipitates.

The same honeycomb structure of corrugated ceramic fiber sheet as in the Example 1 was impregnated with the slurry to provide a catalyst structure having a ternary catalyst of MnO₂/Ag₂O/TiO₂ (50/20/30 in weight ratio) supported thereon in a supporting ratio of 101 % based on the honeycomb.

### Measurement of Deozonizing Activity

The deozonizing activity of the catalysts prepared in Examples 1 and 2 was measured as follows. As shown in Fig. 1, air was introduced into an ozone generator 1 so that the air contained 10 ppm of ozone, and then NO and N₂ were added to the ozone-laden air so that it contained 1 ppm of nitrogen monoxide.

The ozone and nitrogen monoxide laden air was then introduced into a nitrogen monoxide filter structure 2 to reduce the nitrogen monoxide to the range of 20-50 ppb and then into a deozonizing catalyst structure 3 in sequence at 20°C at a space velocity of 100000 hr⁻¹. The ozone concentration in the air at the inlet and the outlet of the reactor were analyzed with an ozone analyzer 4. The ozone decomposition rate was measured at the initial stage and after 1, 10 and 100 hours, respectively.

For comparison, the ozone and nitrogen monoxide laden air was introduced directly into the deozonizing catalyst structure.

The ozone decomposition rate (%) was calculated based on an expression: [(C₁-C₂)/C₁] x 100, wherein C₁ is the ozone concentration at the inlet and C₂ is the ozone concentration at the outlet. The results are shown in Table 1.

**TABLE 1**

| | | Ozone Decomposition Rate (%) | | | |
|---|---|---|---|---|---|
| | | Initial | After | | |
| | | | One hour | 10 hours | 100 hours |
| Example 1 | No Filter Provided | 99.8 | 78.1 | 62.0 | 32.5 |
| | Filter Provided | 99.8 | 84.1 | 78.4 | 49.6 |
| Example 2 | No Filter Provided | 99.9 | 95.2 | 83.7 | 42.9 |
| | Filter Provided | 99.9 | 99.9 | 99.8 | 98.3 |

### SECTION II

The air was laden with 1 ppm of sulfur dioxide in place of nitrogen monoxide, and otherwise in the same manner as above, the ozone decomposition rate was measured. The air after desulfurization with a filter structure was found to contain sulfur dioxide in an amount of 20-50 ppb. The results are shown in the Table 2.

**TABLE 2**

| | | Ozone Decomposition Rate (%) | | | |
|---|---|---|---|---|---|
| | | Initial | After | | |
| | | | One hour | 10 hours | 100 hours |
| Example 1 | No Filter Provided | 99.8 | 76.5 | 59.1 | 29.8 |
| | Filter Provided | 99.8 | 84.1 | 78.4 | 49.6 |
| Example 2 | No Filter Provided | 99.9 | 94.2 | 82.9 | 41.6 |
| | Filter Provided | 99.9 | 99.9 | 99.9 | 98.9 |

### SECTION III

### Preparation of Filter Structure 1

A commercially available activated carbon filter Actcarbon ACH-1 (K.K. Kobe Seikosho) was used as a filter structure.

### Preparation of Filter Structure 2

An amount of 100 g of carbon fibers from pitch available from Kansai Tar Products were dispersed in 100 g of aqueous solution of ferric nitrate (10 g in terms of Fe₂O₃, 200 g/l in terms of Fe₂O₃) under stirring and aeration, and then a 1 N aqueous solution of sodium hydroxide was added gradually so that the mixture had finally a pH of 3.5, followed by one hour aging, to provide carbon fibers having FeOOH supported thereon.

The carbon fiber was washed with water, dispersed in water, and made into sheet manually. The sheet was then corrugated to a honeycomb structure having a pitch of 2.6 mm.

### Measurement of Deozonizing Activity

The air was laden with 10 ppm of nitrogen monoxide, and in the same manner as in Section I, the ozone decomposition rate was measured. The air after denitrization with a filter structure was found to contain nitrogen monoxide in an amount of 20-50 ppb. The results are shown in Table 3.

**TABLE 3**

| | | Ozone Decomposition Rate (%) | | | |
|---|---|---|---|---|---|
| | | Initial | After | | |
| | | | 1 hr | 10 hrs | 100 hrs |
| No Catalyst | Filter 1 | 95.2 | 61.7 | 21.5 | 5.9 |
| | Filter 2 | 99.0 | 72.3 | 35.9 | 16.5 |
| Example 1 | No Filter Provided | 99.8 | 78.1 | 62.0 | 32.5 |
| | Filter 1 | 99.9 | 92.9 | 72.6 | 48.1 |
| | Filter 2 | 99.9 | 98.2 | 80.4 | 64.7 |
| Example 2 | No Filter Provided | 99.9 | 95.2 | 83.7 | 42.9 |
| | Filter 1 | 99.9 | 99.9 | 99.1 | 92.2 |
| | Filter 2 | 99.9 | 99.9 | 99.8 | 97.0 |

The air was laden with 1 ppm of sulfur dioxide, and in the same manner as in Section II, the ozone decomposition rate was measured. The air after desulfurization with a filter structure was found to contain sulfur dioxide in an amount of 10-30 ppb. The results are shown in the Table 4.

**TABLE 4**

| | | Ozone Decomposition Rate (%) | | | |
|---|---|---|---|---|---|
| | | Initial | After | | |
| | | | 1 hr | 10 hrs | 100 hrs |
| No Catalyst | Filter 1 | 95.5 | 51.3 | 14.2 | 4.1 |
| | Filter 2 | 97.9 | 69.6 | 23.0 | 12.5 |
| Example 1 | No Filter Provided | 99.8 | 76.5 | 59.1 | 59.8 |
| | Filter 1 | 99.8 | 89.7 | 70.2 | 42.7 |
| | Filter 2 | 99.9 | 93.5 | 76.8 | 33.3 |
| Example 2 | No Filter Provided | 99.9 | 94.2 | 82.9 | 41.6 |
| | Filter 1 | 99.9 | 99.9 | 95.3 | 78.1 |
| | Filter 2 | 99.9 | 99.9 | 99.0 | 85.4 |

### SECTION IV

### Preparation of Catalysts Structure

An amount of 600 g of MnO₂ having a specific surface area of 48 m²/g, 300 g of anatase TiO₂ having a specific surface area of 107 m²/g, 100 g of Ag₂O and a small amount of water were mixed and slurried. The same corrugated honeycomb as hereinbefore was impregnated with the slurry to provide a catalyst structure having a ternary catalyst of MnO₂/Ag₂O/TiO₂ (60/10/30 in weight ratio) supported thereon in a supporting ratio of 100 % based on the honeycomb.

### Preparation of Nitrogen Oxides Filter Structure

### Example 1

After drying at 100°C for 18 hours, Kibushi clay was milled with a sample mill provided with 0.5 mm mesh screens. Activated carbon (Kyoryoku "Shirasagi" available from Takeda Chemical Industries) was likewise milled.

Amounts of 20 Kg of the clay and 20 Kg of the activated carbon were mixed and milled with a V-type blender. The mixture was mixed and kneaded with 2 Kg of a methyl cellulose binder (YB-32 available from Yuken Kogyo) and water. The resultant plastic mixture was extruded into a honeycomb structure under an extrusion pressure of 30-35 Kg/cm² with a screw extruder.

The honeycomb structure was air-dried at room temperature, heated to 40°C at a rate of 5°C per minute in a nitrogen atmosphere, and then maintained at the temperature for three hours, followed by cooling to room temperature at a rate of 10°C per hour, to provide a honeycomb structure having an opening rate of 55 %, a pitch of 1.8 mm and a water absorption rate of 23 %.

The honeycomb structure was cut to a portion, and the portion was immersed in an aqueous solution of potassium hydroxide (300 g/l). After removing excess water, the honeycomb structure was air-dried at 120°C for three hours to provide a nitrogen oxides filter structure having a binary component of activated carbon/KOH in a weight ratio of 93.5/6.5.

### Example 2

An aqueous solution of sodium hydroxide (300 g/l) was used in place of solution of potassium hydroxide, and otherwise in the same manner as in the Example 1, there was prepared a nitrogen oxides filter structure having a binary component of activated carbon/NaOH in a weight ratio of 93.5/6.5.

### Example 3

An aqueous solution of lithium hydroxide (300 g/l) was used in place of solution of potassium hydroxide, and otherwise in the same manner as in the Example 1, there was prepared a nitrogen oxides filter structure having a binary component of activated carbon/LiOH in a weight ratio of 93.5/6.5.

### Example 4

Clay and activated carbon, both the same as in Example 1, and 2.22 Kg of magnesium carbonate were mixed and milled with a V-type blender. The mixture was formed into a plastic mixture and extruded into a honeycomb structure as a nitrogen oxides filter structure having a binary component of activated carbon/MgCO₃ in a weight ratio of 90/10.

### Example 5

In the same manner as in Example 4, there was prepared a nitrogen oxides filter structure having a binary component of activated carbon/CaCO₃ in a weight ratio of 90/10.

### Example 6

In the same manner as in Example 4, there was prepared a nitrogen oxides filter structure having a binary component of activated carbon/SrCO₃ in a weight ratio of 90/10.

### Example 7

In the same manner as in Example 4, there was prepared a nitrogen oxides filter structure having a binary component of activated carbon/BaCO₃ in a weight ratio of 90/10.

### Example 8

Potassium hydroxide was supported in the same manner as in Example 1 on the honeycomb structure prepared in Example 5 to provide a nitrogen oxides filter structure having a ternary component of activated carbon/CaCO₃/KOH in a weight ratio of 84/9.5/6.5.

### Example 9

Sodium hydroxide was supported in the same manner as in Example 1 on the honeycomb structure prepared in Example 5 to provide a nitrogen oxides filter structure having a ternary component of activated carbon/CaCO₃/NaOH in a weight ratio of 84/9.5/6.5.

### Comparative Example 1

The honeycomb structure prepared in Example 1 having no potassium hydroxide supported thereon was used as a nitrogen oxides filter structure.

### Comparative Example 2

An amount of 20 Kg of the same clay as in Example 1 and 20 Kg of calcium carbonate were mixed and milled with a V-type blender. The mixture was formed into a plastic mixture and extruded into a honeycomb structure as a nitrogen oxides filter structure having a binary component of CaCO₃/KOH in a weight ratio of 93.5/6.5.

### Measurement of Deozonizing Activity

The deozonizing activity of the catalysts prepared in Examples 1-9 and Comparative Examples 1 and 2 was measured in the same manner as in Section I. The results are shown in the Table 5.

**TABLE 5**

| | Ozone Decomposition Rate (%) | | | |
|---|---|---|---|---|
| | Initial | After | | |
| | | One hour | 10 hours | 100 hours |
| No Filter | 99.9 | 96.3 | 86.5 | 50.3 |
| Example 1 | 99.9 | 99.9 | 99.9 | 98.9 |
| 2 | 99.9 | 99.9 | 99.9 | 98.5 |
| 3 | 99.9 | 99.9 | 99.9 | 98.1 |
| 4 | 99.9 | 99.9 | 99.6 | 96.8 |
| 5 | 99.9 | 99.9 | 99.9 | 97.8 |
| 6 | 99.9 | 99.9 | 99.7 | 97.6 |
| 7 | 99.9 | 99.9 | 99.5 | 96.7 |
| 8 | 99.9 | 99.9 | 99.9 | 99.9 |
| 9 | 99.9 | 99.9 | 99.9 | 99.3 |
| Comparative 1 | 99.9 | 99.9 | 97.8 | 89.9 |
| 2 | 99.9 | 99.9 | 96.8 | 88.2 |

## Claims

1. A method of deozonizing waste gas which comprises contacting the waste gas with a deozonizing catalyst characterised in that before said contact with deozonizing catalyst the waste gas is contacted with a filter for nitrogen oxides and/or sulfur oxides.

2. A method according to claim 1 wherein the filter contains at least one component selected from activated carbon, zeolites, perovskites and alkali and alkaline earth metal oxides, hydroxides and carbonates.

3. A method according to claim 2 wherein the filter also contains FeOOH.

4. A method according to claim 2 or 3 wherein the filter contains activated carbon as a first adsorbent and at least one second adsorbent selected from alkali and alkaline earth metal oxides, hydroxides and carbonates.

5. A method according to claim 4 wherein the filter structure is composed of a honeycomb structure comprising a ceramic carrier material and activated carbon, and said second adsorbent supported on the honeycomb structure.

6. A method according to claim 4 wherein the first and second adsorbents are composed of 30 - 95% by weight of activated carbon and 70 - 5% by weight of the second adsorbent.

## Patentansprüche

1. Verfahren zur Deozonisierung von Abgas umfassend das Inkontaktbringen des Abgases mit einem deozonisierenden Katalysator dadurch gekennzeichnet, daß das Abgas vor dem Kontakt mit einem deozonisierenden Katalysator mit einem Filter für Stickstoffoxide und/oder Schwefeloxide in Kontakt gebracht wird.

2. Verfahren nach Anspruch 1, bei dem der Filter zumindest ein aus aktiviertem Kohlenstoff, Zeolithen, Perowskiten und Alkali- und alkalischen Erdmetalloxiden, Hydroxiden und Carbonaten ausgewähltes Bestandteil enthält.

3. Verfahren nach Anspruch 2, bei dem der Filter außerdem FeOOH enthält.

4. Verfahren nach Anspruch 2 oder 3, bei dem der Filter aktivierten Kohlenstoff als erstes Adsorptionsmittel und zumindest ein zweites aus Alkali- und alkalischen Erdmetalloxiden, Hydroxiden und Carbonaten ausgewähltes Adsorptionsmittel enthält.

5. Verfahren nach Anspruch 4, bei dem der Filteraufbau eine zellenartige Struktur aufweist und ein keramisches Trägermaterial und aktivierten Kohlenstoff umfaßt, wobei das zweite Adsorptionsmittel in der zellenartigen Struktur aufgenommen ist.

6. Verfahren nach Anspruch 4, bei dem das erste und das zweite Adsorptionsmittel aus 30 - 95 Gew.-% aktiviertem Kohlenstoff und 70 - 5 Gew.-% des zweiten Adsorptionsmittels zusammengesetzt sind.

## Revendications

1. Un procédé de désozonisation de gaz de rejet qui comprend la mise en contact du gaz de rejet avec un catalyseur de désozonisation, caractérisé en ce que, avant ledit contact avec le catalyseur de désozonisation, le gaz de rejet est mis en contact avec un filtre d'oxydes d'azote et/ou d'oxydes de soufre.

2. Un procédé selon la revendication 1 dans lequel le filtre contient au moins un composant choisi parmi le charbon actif, les zéolites, les perovskites et les oxydes, hydroxydes et carbonates de métaux alcalins et alcalino-terreux.

3. Un procédé selon la revendication 2 dans lequel le filtre renferme aussi du FeOOH.

4. Un procédé selon la revendication 2 ou 3 dans lequel le filtre contient du charbon actif formant un premier agent adsorbant et au moins un deuxième agent adsorbant choisi parmi les oxydes, hydroxydes et carbonates des métaux alcalins et alcalino-terreux.

5. Un procédé selon la revendication 4 dans lequel la structure du filtre est composée d'une structure en nid d'abeilles comprenant un matériau céramique de support et du charbon actif, ledit deuxième agent adsorbant étant supporté par la structure en nid d'abeilles.

6. Un procédé selon la revendication 4 dans lequel les premier et deuxième agents adsorbants sont composés de 30 à 95 % en poids de charbon actif et de 70 à 5 % en poids du deuxième agent adsorbant.
